# EUROPEAN PATENT SPECIFICATION

(11) **EP 3 368 202 B1**
(45) Date of publication and mention of the grant of the patent: **07.08.2019**
(21) Application number: 16745189.7
(22) Date of filing: 07.06.2016
(51) Int. Cl.: C10G 11/18, B01J 4/00

(54) **ATOMIZATION OF HYDROCARBON FEEDSTOCK**
ZERSTÄUBUNG VON KOHLENWASSERSTOFFROHSTOFFEN
ATOMISATION DE CHARGE D'HYDROCARBURES

(30) Priority: 30.10.2015 IN 4130MU2015
(43) Date of publication of application: 05.09.2018
(73) Proprietor: Hindustan Petroleum Corporation Limited, Maharashtra Mumbai 400020 (IN)
(72) Inventor: KUMAR, Pramod, Hoskote Bangalore 560 067 (IN); K, Madan Kumar, Hoskote Bangalore 560 067 (IN); PEDDY, Venkata Chalapathi Rao, Hoskote Bangalore 560 067 (IN); NETTEM, Venkateswarlu Choudary, Hoskote Bangalore 560 067 (IN)
(74) Representative: Lavoix
(86) International application number: PCT/IN2016/050171
(87) International publication number: WO 2017/072786

(56) References cited:
- CN-A- 101 920 186
- US-A- 5 948 241
- US-A1- 2012 302 805

## Description

### TECHNICAL FIELD

The present disclosure generally relates to an atomizer, and particularly but not exclusively, to an atomizer for atomization of a hydrocarbon feedstock for fluid catalytic cracking process.

### BACKGROUND

Fluid Catalytic Cracking (FCC) process is a widely used process to convert heavy hydrocarbon feedstock into lighter and more valuable products. The heavy hydrocarbon feedstock includes atmospheric gas oils, vacuum gas oils, topped crudes, residuum, and the like. Typically, the hydrocarbon feedstock of a high boiling point range is pre-heated and is brought into contact with a hot cracking catalyst in a catalytic cracking reactor. Further, the hydrocarbon feedstock is cracked to give products of lower boiling point which are more valuable, such as LPG, gasoline, diesel and light olefins, for example propylene and butylene.

Typically, the efficiency of the FCC process is governed by many factors, such as, but not limited to, temperature in the catalytic cracking reactor, residence time, activity of the cracking catalyst, surface area of the hydrocarbon feedstock, reactor configuration, to name a few. Among other parameters, the surface area per unit volume of the hydrocarbon feedstock influences the efficiency and yield of the catalytic cracking reaction. Greater the surface area per unit volume better is the possibility for the hot cracking catalyst to come in contact with the hydrocarbon feed stock and faster is the vaporization in the FCC reactor. For this purpose, the heavy hydrocarbon feedstock is atomized in an atomizer, for the FCC process. Typically, the atomization process involves breaking down the hydrocarbon feedstock into a number of droplets to increase the surface area to volume ratio of the hydrocarbon feedstock. This process generates fine droplets for fast vaporization, thereby enhancing the efficiency of the FCC process.

US 2012/302805 A1 discloses a process and an assembly for atomization of a liquid hydrocarbon.

### BRIEF DESCRIPTION OF DRAWINGS

The detailed description is provided with reference to the accompanying figures. In the figures, the left-most digit(s) of a reference number identifies the figure in which the reference number first appears. The same numbers are used throughout the drawings to reference like features and components.
FIG. 1 illustrates an assembly for the atomization of a hydrocarbon feedstock, in accordance with an implementation of the present subject matter.
FIG. 2 illustrates a process for atomization of the hydrocarbon feedstock, in accordance with an implementation of the present subject matter.

### DETAILED DESCRIPTION

The present invention relates to an assembly for atomization as defined in claim 1, and to a process for atomizing a hydrocarbon feedstock as defined in claim 6. The hydrocarbon feedstock may include fuel oil, asphalt, and the like. In an example, the hydrocarbon feedstock may be obtained from crude oils or petroleum refineries. Although, the description herein provided is with reference to atomization of hydrocarbon feedstock for a Fluid Catalytic Cracking (FCC) process, it may be understood that the atomization can be performed with other liquids as well for varied applications, albeit with a few variations, as may be understood by a person skilled in the art.

Conventional atomizers are based on internally mixing the steam and liquid feed upstream of a nozzle exit to generate a mixture; and further, transmitting the mixture to the nozzle exit. Although, these atomizers minimize the requirement of a high feed pressure, the mixture may stratify into two phases while transmitting to the nozzle exit, regardless of how well the two phases are mixed initially, leading to less efficient atomization.

Certain other conventionally used atomizers have the nozzle exit with a very small opening. As a result, the nozzle exit may be easily plugged or choked by various impurities or coking. The downtime and replacement process is very tedious and expensive.

The conventional atomizers fall short in completely and efficiently atomizing a heavy hydrocarbon feedstock which has a high viscosity and a very high surface tension. Inefficient atomization leads to non-uniformity in terms of diameter and velocity of the droplets of the atomized hydrocarbon feedstock. Moreover, it takes considerable time for such hydrocarbon feedstock to vaporize in the FCC reactor. Delayed vaporization of the hydrocarbon feedstock in turn leads to slow and inadequate absorption of heat by the hydrocarbon droplets inside the FCC reactor, thus leading to undesirable thermal cracking and excessive production of byproducts such as coke and gas.

The present subject matter provides an atomizer assembly, herein referred to as an assembly, implementing the disclosed method for atomizing a hydrocarbon feedstock. The hydrocarbon feedstock is atomized into fine droplets by thoroughly mixing the hydrocarbon feedstock with a diluent mixed steam, in opposing motions, to produce an emulsion. In an example, the opposing motion is a cyclonic, and an anti-cyclonic motion. The emulsion is incident against an impingement section, where the emulsion is shattered to generate droplets of the hydrocarbon feedstock. The droplets are further transmitted to a nozzle exit for transmission to the FCC reactor.

The assembly of the present subject matter causes atomization of the hydrocarbon feedstock of varied viscosities and surface tension. Further, the assembly allows for internal mixing of the hydrocarbon feedstock with the diluent mixed steam, thereby minimizing the requirement of the high feed pressure. The use of cyclonic motion for mixing the hydrocarbon feedstock with the diluent mixed steam allows for enhanced mixing and also reduces the surface tension and viscosity of the heavy hydrocarbon feedstock. This enhanced mixing results in generating droplets of the hydrocarbon feedstock of uniform diameter and viscosity at the nozzle exit, thereby enhancing the efficiency of the atomization process.

The following detailed description describes an atomization device for atomizing a hydrocarbon feedstock and its uses in detail. While the aspects of the atomization device can be implemented in any number of different applications and configurations, the atomization device of the present subject matter is described in the context of the following exemplary embodiments

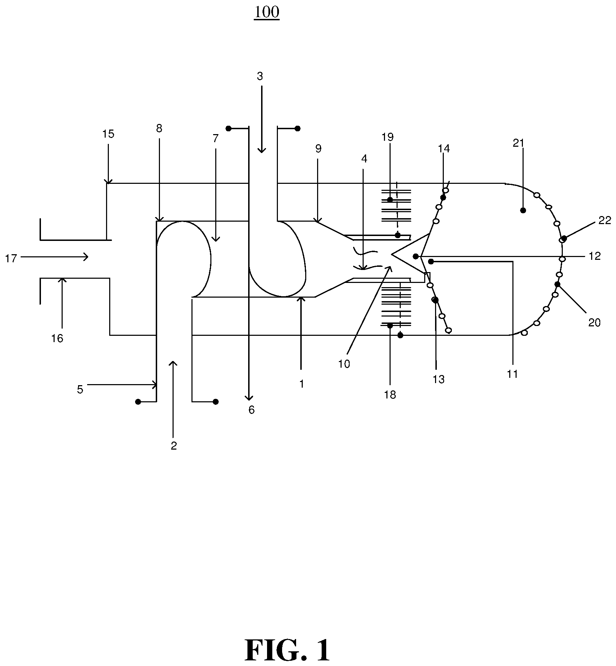

FIG.1 illustrates an atomizer assembly, herein referred to as assembly 100, in accordance with an embodiment of the present subject matter. The assembly includes an inner conduit 1 for mixing hydrocarbon feedstock 2 and diluent mixed steam 3 to produce an emulsion 4. The hydrocarbon feedstock 2 is received by the inner conduit 1 through a first inlet 5 positioned tangentially to the inner conduit 1. The hydrocarbon feedstock 2 may be obtained from crude oils or from petroleum refineries.

The inner conduit 1 further receives the diluent mixed steam 3 through a second inlet 6 that is positioned tangentially to the inner conduit 1, and opposite to the direction of the first inlet 5. In an example, the diluent and the sweeping steam may be mixed together, herein referring to as the diluent mixed steam 3, prior to feeding into the second inlet 6. The diluent includes middle distillates, aromatic rich streams, and surfactants for reducing the viscosity of the hydrocarbon feedstock 2. In an example, the quantity of the diluent mixed steam 3 is dependent on the viscosity of the hydrocarbon feedstock 2. Further, the hydrocarbon feedstock 2 and the diluent mixed steam 3 may be mixed together to form an emulsion 4.

In an embodiment, the inner conduit 1 may be so structured to allow the flow of emulsion 4 in a unidirectional manner by a throttling mechanism. In an example, the inner conduit 1 includes a body 7 coupled to the first inlet 5 and the second inlet 6 to receive the hydrocarbon feedstock 2 and the diluent mixed steam 3. In an example, the flow of the hydrocarbon feedstock 2 into the body 7 of the inner conduit 1 is in a motion opposing the diluent mixed steam 3. The motion is a cyclonic motion. Accordingly, the hydrocarbon feedstock 2 may flow into the body 7 of the inner conduit 1 in a cyclonic motion, whereas the diluent mixed steam 3 may flow in an anti-cyclonic motion.

Further, the hydrocarbon feedstock 2 and the diluent mixed steam 3 are mixed together in the body 7 of the inner conduit 1 to form an emulsion 4. In an example, the distance between the first inlet 5 and the second inlet 6 is kept minimum to ensure thorough mixing to form an emulsion 4. The use of cyclonic motion for flow of the hydrocarbon feedstock 2 and the diluent mixed steam 3 allows for enhanced mixing and also reduces the surface tension and viscosity of the hydrocarbon feedstock 2. This enhanced mixing results in generating droplets of the hydrocarbon feedstock 2 of uniform diameter and viscosity at a nozzle exit 20, thereby enhancing the efficiency of the atomization process, and also minimizing the requirement of the high feed pressure.

The body 7 of the inner conduit 1 further includes first closed end 8 associated with a first cross-sectional area, and a second end 9. The second end 9 leads to an inwardly tapered to narrow exit 10, where the narrow exit 10 is associated with a second-cross sectional area. Further, the second cross-sectional area is smaller compared to the first cross-sectional area. This smaller cross sectional area at the narrow exit is achieved by inward tapering from the second end 9 in a linear manner. Such structuring allows for the flow of the emulsion 4 from the body 7 towards the narrow exit 10 by a throttling mechanism. The throttling mechanism allows flow of the emulsion 4 with increased velocity for effective atomization.

The assembly 100 further includes an impingement section 11 located axially and contiguous with the inner conduit 1 for atomization. The impingement section 11 includes a serrated wedge shaped guiding edge 12 aligned axially at an exit end of the narrow exit 10 in an inverted manner. The non-perforated serrated wedge shaped guiding edge may be herein referred to as a guiding edge12. The guiding edge 12 is supported by one or more conical plates 14 on either side extending from a rim of the guiding edge 12. In an example, the preferred number of conical plates 14 is two. Further, each of the one or more conical plates 14 is supported by one or more orifices 13.

In an example, the emulsion 4 is impacted or incident against the guiding edge 12 to cause atomization. The use of the guiding edge 12 in an inverted manner minimizes pressure loss during expansion. In the invention, the atomization is achieved by impacting the emulsion 4 against the guiding edge 12 to form an emulsion film on at least a portion of the impingement section 11 by shearing mechanism. In an example, the emulsion film is formed on the conical plates 14 bearing one or more orifices 13.

The assembly 100 further includes an outer conduit 15 arranged concentrically outside the inner conduit 1. The outer conduit 15 further includes a steam inlet 16 for feeding atomizing steam 17 through the steam inlet 16. The outer conduit 15 further includes two or more jet tubes 18 oriented towards the inner conduit 1 at a certain angle from a nozzle exit 20. The jet tubes 18 further include a plurality of jet orifices 19 to allow for passage of atomizing steam 17 from the jet tubes 18 to the conical plates 14. In an example, the angle of the jet tubes 18 is in a range of 30 to 60 degree, preferably between 34 to 45 degrees from the nozzle exit 20. The atomizing steam 17 from the steam inlet 16 is passed through the space between outer walls on the inner conduit 1 and the outer conduit 15 to the orifices 13 on the conical plate 14. The passage of the atomizing steam 17 to the orifices 13 on the conical plate 14 includes passage through the jet orifices 19 disposed on the jet tubes 18, to the orifices 13 disposed on the conical plate 14. The atomizing steam 17 impinges the emulsion film formed on the two or more conical plates 14. This causes partial atomization of the hydrocarbon feedstock 2.

The assembly 100 further includes a mixing chamber 21 positioned in a contiguous manner beyond the impingement section 11. The mixing chamber 21 receives the partially atomized emulsion 4 containing the hydrocarbon feedstock 2 and diluent mixed steam 3. The mixing chamber 21 is to receive and mix the hydrocarbon feedstock 2, diluent mixed steam 3, and the atomization steam 17 through the orifices 13 thoroughly for a sufficient time, to generate a plurality of droplets of the hydrocarbon feedstock 2. The droplets of hydrocarbon feedstock 2 are further transmitted to the FCC reactor through a plurality of nozzle orifices 22 disposed on the nozzle exit 20 region. The nozzle exit 20 region is disposed axially to the impingement section 11.

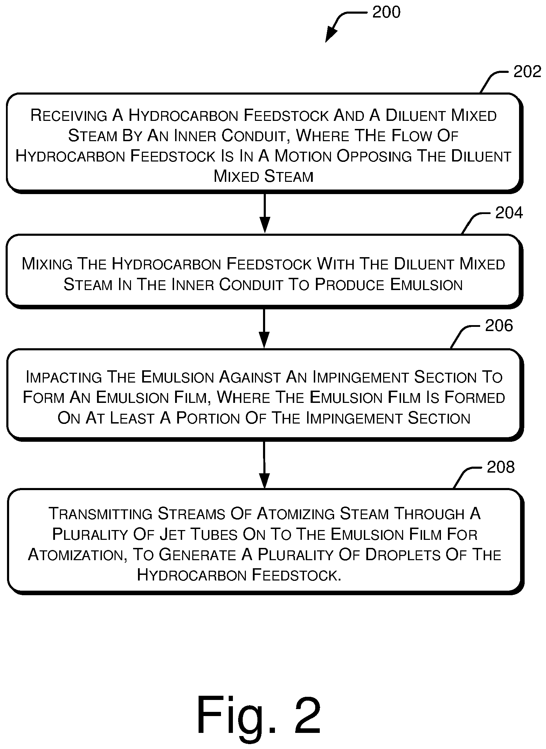

FIG. 2 describes a process for atomizing a hydrocarbon feedstock, in accordance with the implementation of the present subject matter. Accordingly, at block 202, the hydrocarbon feedstock and a diluent mixed steam are received by an inner conduit to produce an emulsion. In the invention, the hydrocarbon feedstock is fed into the inner conduit through the first inlet, and the diluent mixed steam is fed through the second inlet, where the first inlet and the second inlet are coupled to the inner conduit. In an example, the flow of hydrocarbon feedstock is in a motion opposing to that of the diluent mixed steam. The motion is a cyclonic motion. In an example, the hydrocarbon feedstock, flows in a cyclonic motion and the diluent mixed steam, flows in an anti-cyclonic motion.

At block 204, the hydrocarbon feedstock and the diluent mixed steam are mixed together in the inner conduit to form an emulsion. In an embodiment, the inner conduit may be so structured to allow the flow of emulsion in a unidirectional manner by a throttling mechanism.

At block 206, the emulsion is impacted against an impingement section to form an emulsion film on at least a portion of the impingement section by shearing mechanism. The impingement section comprising: a serrated wedge shaped guiding edge aligned axially at an exit end of the inner conduit in an inverted manner; and a plurality of conical plates, each bearing a plurality of orifices, disposed on either sides of rim of the guiding edge. In an example, the emulsion is impacted/made incident against the guiding edge to cause atomization. The use of the guiding edge in an inverted manner minimizes pressure loss during expansion. In an example, the emulsion is impacted against the guiding edge to form an emulsion film on at least a portion of the impingement section by shearing mechanism. In an example, the emulsion film is formed on the conical plates bearing one or more orifices.

At block 208, a stream of atomizing steam is passed through two or more jet tubes onto the emulsion film for atomization. The atomization results in generation of plurality of drops of hydrocarbon feedstock. In an example, the droplets are generated by passing the atomizing steam to the emulsion film on the orifices disposed on the conical plates. The atomizing steam impinges the emulsion film formed on the two or more conical plates. This causes partial atomization of the hydrocarbon feedstock. Further, the hydrocarbon feedstock, diluent mixed steam, and the atomization steam, are mixed in a mixing chamber for an optimum condition to generate the droplets of the hydrocarbon feedstock.

The order in which the method 200 is described is not intended to be construed as a limitation, and the steps described can be combined in other ways obvious to a person skilled in the art. Additionally, individual blocks can be added or deleted from the method without departing from the disclosed present subject matter

Although the subject matter has been described in considerable detail with reference to certain examples and implementations thereof, other implementations are possible. As such, the scope of the appended claims should not be limited to the description of the preferred examples and implementations contained therein.

## Claims

1. An assembly (100) for atomization of a hydrocarbon feedstock, the assembly (100) comprising:
an inner conduit (1) for receiving and mixing the hydrocarbon feedstock (2) with a diluent mixed steam (3) to produce an emulsion (4), the inner conduit (1) comprising:
a first inlet (5) for feeding the hydrocarbon feedstock (2) to the inner conduit (1); and
a second inlet (6) for feeding the diluent mixed steam (3) to the inner conduit (1), wherein the flow of the diluent mixed steam (3) is in a motion opposing that of the hydrocarbon feedstock (2);
an impingement section (11) for atomization of the hydrocarbon feedstock (2), the impingement section (11) comprising:
a serrated wedge shaped guiding edge (12) aligned axially at an exit end of the inner conduit (1) in an inverted manner; and
a plurality of conical plates (14), each bearing a plurality of orifices (13), disposed on either side of rim of the guiding edge (12);
wherein the impingement section (11) is to form an emulsion film on at least a portion of the conical of the conical plates (14) on impact of the emulsion (4) against the guiding edge (12);
an outer conduit (15) positioned concentrically above the inner conduit (1), the outer conduit (15) comprising:
a steam inlet (16) for feeding atomizing steam (17), wherein the atomizing steam (17) is passed through a space between outer walls of inner conduit (1) and the outer conduit (15); and
a plurality of jet tubes (18) oriented towards the inner conduit (1) at a certain angle from a nozzle exit (20), the jet tubes comprising jet orifices (19) to inject streams of atomizing steam (17) onto each of the plurality of the conical plates (14) to cause partial atomization of the hydrocarbon feedstock (2) in the emulsion film and to disperse a plurality of droplets from each of the plurality of orifices (13) disposed on the plurality of conical plates (14); and
a nozzle exit (20) aligned axially to the impingement section (11) to transmit the plurality of droplets to a reactor.

2. The assembly (100) as claimed in claim 1, wherein the inner conduit (1) comprises a body (7) structured to allow for unidirectional flow of the emulsion, the body (7) including:
a first closed end (8); wherein the first closed end (8) is associated with a first cross-sectional area; and
a second end (9), wherein the second end (9) is inwardly tapering to a narrow exit (10), wherein the narrow exit (10) is associated with a second cross-sectional area, and wherein the second cross-sectional area is smaller than the first cross-sectional area.

3. The assembly (100) as claimed in claim 1, wherein first inlet (5) and the second inlet (6) are positioned tangentially to the inner conduit (1) and wherein the second inlet (6) is positioned opposite to the direction of the first inlet (5) to obtain a cyclonic motion and an anti-cyclonic motion of the hydrocarbon feedstock (2) and the diluent mixed steam (3).

4. The assembly (100) as claimed in claim 1, wherein the assembly (100) comprises:
a mixing chamber (21) connected to the outer conduit (15) to receive partially atomized emulsion (4) through each of the plurality of orifices (13) to generate the plurality of droplets of the hydrocarbon feedstock (2).

5. The assembly (100) as claimed in claim 1, wherein the jet tubes (18) are placed at an angle of 30 to 60 degrees with respect to the nozzle exit (20).

6. A process for atomizing a hydrocarbon feedstock (2) using an assembly according to any of claims 1-5, the process comprising:
receiving the hydrocarbon feedstock (2) and a diluent mixed steam (3) from a first inlet (5) and a second inlet (6), respectively, by an inner conduit (1), wherein the flow of the hydrocarbon feedstock (2) is in a motion opposing the diluent mixed steam (3);
mixing the hydrocarbon feedstock (2) with the diluent mixed steam (3) in the inner conduit (1) to produce an emulsion (4);
impacting the emulsion (4) against an impingement section (11) to form an emulsion film, wherein the emulsion film is formed on at least a portion of the impingement section (11) by shearing mechanism, the impingement section (11) comprising: a serrated wedge shaped guiding edge (12) aligned axially at an exit end of a narrow exit (10) of the inner conduit (1) in an inverted manner; and a plurality of conical plates (14), each bearing a plurality of orifices (13), disposed on either sides of rim of the guiding edge (12);
feeding atomizing steam (17) through a steam inlet (16) of an outer conduit (15) positioned concentrically above the inner conduit (1), wherein the atomizing steam (17) is passed through a space between outer walls of inner conduit (1) and the outer conduit (15);
transmitting streams of atomizing steam (17) through a plurality of jet tubes (18) of the outer conduit (15) onto the emulsion film to cause partial atomization of the hydrocarbon feedstock (2) in the emulsion film and to disperse a plurality of droplets from each of the plurality of orifices (13) disposed on the plurality of conical plates (14); and
transmitting the plurality of droplets to a reactor by a nozzle exit (20) aligned axially to the impingement section (11).

7. The process as claimed in claim 6, wherein the first inlet (5) is in a direction tangential to the inner conduit (1).

8. The process as claimed in claim 6, wherein the motion is a cyclonic motion, and anti-cyclonic motion

9. The process as claimed in claim 6, wherein the atomizing process comprises mixing the hydrocarbon feedstock (2), diluent mixed steam (3), and the atomization steam (17) in a mixing chamber (21) to generate the plurality of droplets of the hydrocarbon feedstock (2).

10. The process as claimed in claim 6, wherein the emulsion (4) flows in a unidirectional flow by a throttling mechanism.

## Patentansprüche

1. Einrichtung (100) zur Atomisierung eines Kohlenwasserstoff-Ausgangsmaterials, wobei die Einrichtung (100) aufweist:
eine innere Leitung (1) zum Empfangen und Mischen des Kohlenwasserstoff-Ausgangsmaterials (2) mit einem Verdünner-Mischdampf (3), um eine Emulsion (4) zu produzieren, wobei die innere Leitung (1) aufweist:
einen ersten Einlass (5) zum Zuführen des Kohlenwasserstoff-Ausgangsmaterials (2) zu der inneren Leitung (1), und
einen zweiten Einlass (6) zum Zuführen des Verdünner-Mischdampfs (3) zu der inneren Leitung (1), wobei der Fluss des Verdünner-Mischdampfs (3) in einer Bewegung ist, die zu jener des Kohlenwasserstoff-Ausgangsmaterials (2) entgegengesetzt ist,
einen Auftreff-Abschnitt (11) zur Atomisierung des Kohlenwasserstoff-Ausgangsmaterials (2), wobei der Auftreff-Abschnitt (11) aufweist:
eine gezackte keilförmige Führungskante (12), die axial ausgerichtet ist an einem Ausgangsende der inneren Leitung (1) in einer umgedrehten Weise, und
eine Mehrzahl von konischen Platten (14), von jeden jede eine Mehrzahl von Öffnungen (13) trägt und die auf beiden Randseiten der Führungskante (12) angeordnet sind,
wobei der Auftreff-Abschnitt (11) vorliegt, um einen Emulsionsfilm an wenigstens einem Abschnitt der konischen der konischen Platten (14) zu bilden beim Auftreffen der Emulsion (4) gegen die Führungskante (12),
eine äußere Leitung (15), die konzentrisch über der inneren Leitung (1) positioniert ist, wobei die äußere Leitung (15) aufweist:
einen Dampfeinlass (16) zum Zuführen von Atomisier-Dampf (17), wobei der Atomisier-Dampf (17) durch einen Raum zwischen Außenwänden der inneren Leitung (1) und der äußeren Leitung (15) passiert wird, und
eine Mehrzahl von Strahlrohren (18), die zu der inneren Leitung (1) hin gerichtet sind in einem bestimmten Winkel von einem Düsenausgang (20) aus, wobei die Strahlrohre Strahlöffnungen (19) aufweisen, um Strahle von Atomisier-Dampf (17) auf jede der Mehrzahl von konischen Platten (14) zu richten, um partielle Atomisierung des Kohlenwasserstoff-Ausgangsmaterials (2) in dem Emulsionsfilm zu verursachen und um eine Mehrzahl von Tröpfchen von jeder der Mehrzahl von Öffnungen (13) aus zu verteilen, die an der Mehrzahl von konischen Platten (14) angeordnet sind, und
einen Düsenausgang (20), der axial zu dem Auftreffabschnitt (11) ausgerichtet ist, um die Mehrzahl von Tröpfchen zu einem Reaktor zu überführen.

2. Einrichtung (100) gemäß Anspruch 1, wobei die innere Leitung (1) einen Körper (7) aufweist, der strukturiert ist, um einen unidirektionalen Fluss der Emulsion zu erlauben, wobei der Körper (7) aufweist:
ein erstes, geschlossenes Ende (8), wobei das erste, geschlossene Ende (8) zu einem ersten Querschnittsbereich zugehörig ist, und
ein zweites Ende (9), wobei das zweite Ende (9) sich nach innen hin zu einem engen Ausgang (10) verjüngt, wobei der enge Ausgang (10) zu einem zweiten Querschnittsbereich zugehörig ist, und wobei der zweite Querschnittsbereich kleiner ist als der erste Querschnittsbereich.

3. Einrichtung (100) gemäß Anspruch 1, wobei der erste Einlass (5) und der zweite Einlass (6) tangential zu der inneren Leitung (1) positioniert sind und wobei der zweite Einlass (6) positioniert ist entgegengesetzt zu der Richtung des ersten Einlasses (5), um eine Zyklon-Bewegung und eine Anti-Zyklon-Bewegung des Kohlenwasserstoff-Ausgangsmaterials (2) und des Verdünner-Mischdampfs (3) zu erlangen.

4. Einrichtung (100) gemäß Anspruch 1, wobei die Einrichtung (100) aufweist:
eine Mischkammer (21), die mit der äußeren Leitung (15) verbunden ist, um partiell atomisierte Emulsion (4) zu empfangen durch jede der Mehrzahl von Öffnungen (13) hindurch, um die Mehrzahl von Tröpfchen des Kohlenwasserstoff-Ausgangsmaterials (2) zu erzeugen.

5. Einrichtung (100) gemäß Anspruch 1, wobei die Strahlrohre (18) in einem Winkel von 30 bis 60 Grad bezüglich des Düsenausgangs (20) angeordnet sind.

6. Verfahren zum Atomisieren eines Kohlenwasserstoff-Ausgangsmaterials (2), verwendend eine Einrichtung gemäß irgendeinem der Ansprüche 1-5, wobei das Verfahren aufweist:
Empfangen des Kohlenwasserstoff-Ausgangsmaterials (2) und eines Verdünner-Mischdampfs (3) von einem ersten Einlass (5) respektive einem zweiten Einlass (6) über eine innere Leitung (1), wobei der Fluss des Kohlenwasserstoff-Ausgangsmaterials (2) in einer Bewegung entgegengesetzt dem Verdünner-Mischdampf (3) ist,
Mischen des Kohlenwasserstoff-Ausgangsmaterials (2) mit dem Verdünner-Mischdampf (3) in der inneren Leitung (1), um eine Emulsion (4) zu produzieren,
Auftreffen-Lassen der Emulsion (4) gegen einen Auftreffabschnitt (11), um einen Emulsionsfilm zu bilden,
wobei der Emulsionsfilm an wenigstens einem Abschnitt des Auftreffabschnitts (11) gebildet ist via
Scherungswirkungsmechanismen, wobei der Auftreffabschnitt (11) aufweist: eine gezackte keilförmige Führungskante (12), die axial ausgerichtet ist an einem Ausgangsende eines engen Ausgangs (10) der inneren Leitung (1) in einer umgedrehten Weise, und eine Mehrzahl von konischen Platten (14), von denen jede eine Mehrzahl von Öffnungen (13) trägt, die auf beiden Randseiten der Führungskante (12) angeordnet sind,
Zuführen von Atomisier-Dampf (17) durch einen Dampfeinlass (16) einer äußeren Leitung (15), die konzentrisch über der inneren Leitung (1) positioniert ist, wobei der Atomisier-Dampf (17) durch einen Raum zwischen äußeren Wänden der inneren Leitung (1) und der äußeren Leitung (15) passiert wird,
Überführen von Strahlen von Atomisier-Dampf (17) durch eine Mehrzahl von Strahlrohren (18) der äußeren Leitung (15) auf den Emulsionsfilm, um partielle Atomisierung des Kohlenwasserstoff-Ausgangsmaterials (2) in dem Emulsionsfilm zu verursachen und um eine Mehrzahl von Tröpfchen von jeder der Mehrzahl von Öffnungen (13) aus zu verteilen, die an der Mehrzahl von konischen Platten (14) angeordnet sind, und Überführen der Mehrzahl von Tröpfchen zu einem Reaktor durch einen Düsenausgang (20), der zu dem Auftreffabschnitt (11) axial ausgerichtet ist.

7. Verfahren gemäß Anspruch 6, wobei der erste Einlass (5) in einer Richtung tangential zu der inneren Leitung (1) vorliegt.

8. Verfahren gemäß Anspruch 6, wobei die Bewegung eine Zyklon-Bewegung und eine Anti-Zyklon-Bewegung ist.

9. Verfahren gemäß Anspruch 6, wobei der Atomisier-Vorgang aufweist Mischen des Kohlenwasserstoff-Ausgangsmaterials (2), des Verdünner-Mischdampfs (3) und des Atomisier-Dampfs (17) in einer Mischkammer (21), um die Mehrzahl von Tröpfchen des Kohlenwasserstoff-Ausgangsmaterials (2) zu erzeugen.

10. Verfahren gemäß Anspruch 6, wobei die Emulsion (4) in einem unidirektionalen Fluss strömt mittels eines Drosselmechanismus.

## Revendications

1. Ensemble (100) destiné à l'atomisation d'une charge d'hydrocarbures, l'ensemble (100) comprenant :
un conduit interne (1) destiné à recevoir et mélanger la charge d'hydrocarbures (2) avec une vapeur mixte de diluant (3) afin de produire une émulsion (4), le conduit interne (1) comprenant :
une première admission (5) destinée à fournir la charge d'hydrocarbures (2) au conduit interne (1) ; et
une seconde admission (6) destinée à fournir la vapeur mixte de diluant (3) au conduit interne (1), dans lequel l'écoulement de la vapeur mixte de diluant (3) s'effectue dans un mouvement opposé à celui de la charge d'hydrocarbures (2) ;
une section d'impact (11) destinée à l'atomisation de la charge d'hydrocarbures (2), la section d'impact (11) comprenant :
un bord de guidage en forme de cale dentelée (12) aligné axialement au niveau d'une extrémité de sortie du conduit interne (1) de manière inversée ; et
une pluralité de plaques coniques (14), qui portent chacune une pluralité d'orifices (13), disposées de n'importe quel côté du rebord du bord de guidage (12) ;
dans lequel la section d'impact (11) est destinée à former un film d'émulsion sur au moins une partie de la forme de cône des plaques coniques (14) lors de l'impact de l'émulsion (4) contre le bord de guidage (12) ;
un conduit externe (15) positionné de manière concentrique au-dessus du conduit interne (1), le conduit externe (15) comprenant :
une admission de vapeur (16) destinée à fournir une vapeur d'atomisation (17), dans lequel la vapeur d'atomisation (17) passe par un espace situé entre les parois externes du conduit interne (1) et le conduit externe (15) ; et
une pluralité de tubes à jet (18) orientés vers le conduit interne (1) à un certain angle par rapport à une sortie de buse (20), les tubes à jet comprenant des orifices à jet (19) destinés à injecter des flux de vapeur d'atomisation (17) dans chacune de la pluralité de plaques coniques (14) afin de provoquer une atomisation partielle de la charge d'hydrocarbures (2) dans le film d'émulsion, et de disperser une pluralité de gouttelettes depuis chacun de la pluralité d'orifices (13) disposés sur la pluralité de plaques coniques (14) ; et
une sortie de buse (20) alignée axialement avec la section d'impact (11) afin de transmettre la pluralité de gouttelettes à un réacteur.

2. Ensemble (100) selon la revendication 1, dans lequel le conduit interne (1) comprend un corps (7) structuré pour permettre un écoulement unidirectionnel de l'émulsion, le corps (7) comprenant :
une première extrémité fermée (8) ; dans lequel la première extrémité fermée (8) est associée à une première zone transversale ; et
une seconde extrémité (9), dans lequel la seconde extrémité (9) est effilée vers l'intérieur, vers une sortie étroite (10), dans lequel la sortie étroite (10) est associée à une seconde zone transversale, et dans lequel la seconde zone transversale est plus petite que la première zone transversale.

3. Ensemble (100) selon la revendication 1, dans lequel la première admission (5) et la seconde admission (6) sont positionnées de manière tangentielle par rapport au conduit interne (1), et dans lequel la seconde admission (6) est positionnée de manière opposée à la direction de la première admission (5) afin d'obtenir un mouvement cyclonique et un mouvement anticyclonique de la charge d'hydrocarbures (2) et de la vapeur mixte de diluant (3).

4. Ensemble (100) selon la revendication 1, dans lequel l'ensemble (100) comprend :
une chambre de mélange (21) reliée au conduit externe (15) afin de recevoir une émulsion partiellement atomisée (4) par le biais de chacun de la pluralité d'orifices (13) afin de générer la pluralité de gouttelettes de la charge d'hydrocarbures (2).

5. Ensemble (100) selon la revendication 1, dans lequel les tubes à jet (18) sont placés à un angle de 30 à 60 degrés par rapport à la sortie de buse (20).

6. Processus d'atomisation d'une charge d'hydrocarbures (2) à l'aide d'un ensemble selon l'une quelconque des revendications 1 à 5, le processus comprenant :
la réception de la charge d'hydrocarbures (2) et d'une vapeur mixte de diluant (3) de la part d'une première admission (5) et d'une seconde admission (6), respectivement, par un conduit interne (1), dans lequel l'écoulement de la charge d'hydrocarbures (2) s'effectue dans un mouvement opposé à la vapeur mixte de diluant (3) ;
le mélange de la charge d'hydrocarbures (2) avec la vapeur mixte de diluant (3) dans le conduit interne (1) afin de produire une émulsion (4) ;
l'impact de l'émulsion (4) contre une section d'impact (11) afin de former un film d'émulsion, dans lequel le film d'émulsion est formé sur au moins une partie de la section d'impact (11) par un mécanisme de cisaillement, la section d'impact (11) comprenant : un bord de guidage en forme de cale dentelée (12) aligné axialement au niveau d'une extrémité de sortie d'une sortie étroite (10) du conduit interne (1) de manière inversée ; et une pluralité de plaques coniques (14), qui portent chacune une pluralité d'orifices (13), disposées sur les côtés du rebord du bord de guidage (12) ;
la fourniture de la vapeur atomisée (17) par le biais d'une admission de vapeur (16) d'un conduit externe (15) positionné de manière concentrique au-dessus du conduit interne (1), dans lequel la vapeur d'atomisation (17) passe par un espace situé entre les parois externes du conduit interne (1) et le conduit externe (15) ;
la transmission des flux de vapeur d'atomisation (17) par le biais d'une pluralité de tubes à jet (18) du conduit externe (15) au film d'émulsion afin de provoquer une atomisation partielle de la charge d'hydrocarbures (2) dans le film d'émulsion, et de disperser une pluralité de gouttelettes depuis chacun de la pluralité d'orifices (13) disposés sur la pluralité de plaques coniques (14) ; et
la transmission de la pluralité de gouttelettes à un réacteur par une sortie de buse (20) alignée axialement avec la section d'impact (11).

7. Processus selon la revendication 6, dans lequel la première admission (5) se trouve dans une direction tangentielle par rapport au conduit interne (1).

8. Processus selon la revendication 6, dans lequel le mouvement est un mouvement cyclonique, et un mouvement anticyclonique.

9. Processus selon la revendication 6, dans lequel le processus d'atomisation comprend le mélange de la charge d'hydrocarbures (2), de la vapeur mixte de diluant (3) et de la vapeur d'atomisation (17) dans une chambre de mélange (21) afin de générer la pluralité de gouttelettes de la charge d'hydrocarbures (2).

10. Processus selon la revendication 6, dans lequel l'émulsion (4) circule en un flux unidirectionnel à l'aide d'un mécanisme d'étranglement.
